**Europäisches Patentamt**

**European Patent Office**

**Office européen des brevets**

(19)

(11) Numéro de publication: **0 161 950 B1**

(12) **FASCICULE DE BREVET EUROPEEN**

(45) Date de publication du fascicule du brevet:
**28.12.88**

(21) Numéro de dépôt: **85400434.8**

(22) Date de dépôt: **06.03.85**

(51) Int. Cl.⁴: **C 21 C 5/56,** C 21 C 5/46,
F 27 D 13/00

(54) Installation et procédé pour charger en continu un réacteur, en matière solide et réchauffer cette dernière avec les gaz émis par le réacteur.

(30) Priorité: **28.03.84 FR 8404827**

(43) Date de publication de la demande:
**21.11.85 Bulletin 85/47**

(45) Mention de la délivrance du brevet:
**28.12.88 Bulletin 88/52**

(84) Etats contractants désignés:
**AT BE DE GB IT LU NL SE**

(56) Documents cités:
**EP-A- 0 056 773**
**DE-A- 3 219 984**
**FR-A- 1 387 077**
**FR-A- 2 202 942**
**FR-E- 91 683**
**GB-A- 517 873**
**GB-A- 2 064 743**

(73) Titulaire: **Litchinko, Catherine, Résidence St Sébastien, Tour C 11 rue Haguenauer, F-54000 Nancy (FR)**
Titulaire: **Litchinko, Igor, 24 rue de la Sygrie, F-92140 Petit Clamart (FR)**
Titulaire: **Litchinko, Victor, Résidence St Sébastien, Tour C 11 rue Haguenauer, F-54000 Nancy (FR)**

(72) Inventeur: **Litchinko, Catherine, Résidence St Sébastien, Tour C 11 rue Haguenauer, F-54000 Nancy (FR)**
Inventeur: **Litchinko, Igor, 24 rue de la Sygrie, F-92140 Petit Clamart (FR)**
Inventeur: **Litchinko, Victor, Résidence St Sébastien, Tour C 11 rue Haguenauer, F-54000 Nancy (FR)**

(74) Mandataire: **Bouju, André et al, Cabinet Bouju 38 avenue de la Grande Armée, F-75017 Paris (FR)**

## Description

La présente invention concerne une installation et un procédé pour charger en continu un réacteur, en matière solide et réchauffer cette dernière par échange thermique avec les gaz chauds émis par le réacteur, tels que les fumées formées lors de la fabrication de l'acier dans un convertisseur à partir de la fonte.

On sait que, lors de l'élaboration de l'acier à partir de la fonte, une quantité importante de gaz chauds et combustibles est émise à la sortie du convertisseur.

Cette énergie était autrefois presque toujours perdue.

Avec les procédés modernes de conversion de la fonte, à l'oxygène, on arrive à récupérer une partie plus ou moins importante de cette énergie.

On distingue essentiellement trois modes de récupération de cette énergie:

- dans des chaudières dites de récupération, produisant de la vapeur;
- par captation des gaz, dite sans combustion; les gaz récupérés sont dans ce cas utilisés comme combustible banal, pour des besoins divers,
- par réchauffage des ferrailles par ces gaz ou les fumées qui en découlent, avant leur chargement dans le convertisseur.

Les particularités de ces trois modes de récupération sont les suivantes:

- avec les chaudières de récupération on récupère en moyenne 50% de la chaleur latente et sensible, mais la production de vapeur suit le cycle de la conversion et est donc discontinue;
- avec la captation sans combustion on ne récupère en général que la chaleur latente des gaz, avec comme ci-dessus une production de gaz discontinue, qui nécessite un stockage dans un gazomètre; la récupération reste moyenne (environ 50% de l'énergie totale contenue dans les gaz) par suite des précautions que l'on est obligé de prendre pour éviter les explosions;
- en réchauffant des ferrailles et en chargeant celles-ci dans le convertisseur; la quantité de ferrailles pour produire une tonne d'acier peut être augmentée et corrélativement la quantité de fonte réduite.

On sait que la fonte exige, pour sa fabrication, une quantité très importante d'énergie (4500 à 6000 thermies, soit 18,8 à 25 gigajoules par tonne de fonte).

Pour fixer les idées, la fabrication d'une tonne d'acier à partir de fonte phosphoreuse exige en moyenne, avec les procédés modernes, 750 kilogrammes de fonte et 330 kilogrammes de ferrailles froides. Lors de cette conversion, le bain émet des gaz contenant environ 220 thermies (920 mégajoules) sous forme de chaleur latente et sensible par tonne de fonte; une récupération à 50% correspond donc à 110 thermies (460 mégajoules) récupérées par tonne de fonte.

La récupération avec réchauffage des ferrailles permet les résultats suivants: en récupérant 90% de l'énergie thermique des fumées, ce qui est raisonnablement possible, le bilan matière et thermique montre que pour produire une tonne d'acier, il faut consommer 514 kilogrammes de fonte et 530 kilogrammes de ferrailles ou de riblons. On consomme en conséquence 750–514 = 236 kilogrammes de fonte en moins et 530–330 = 200 kilogrammes de ferrailles en plus, le gain dû à la fonte non fabriquée étant de $0,236 \times 4\,500 = 1\,062$ thermies (4,44 gigajoules) au minimum en moins par tonne d'acier produit; ce chiffre est très supérieur aux $220 \times 0,750 \times 0,9 = 148$ thermies (621 mégagoules) par tonne d'acier récupérées dans les fumées. De plus, en épuisant davantage la chaleur contenue dans les fumées, on facilite l'épuration de celles-ci. Cette épuration est rendue en effet presque partout obligatoire pour protéger l'environnement.

Parmi les procédés connus pour le réchauffage des ferrailles, citons ceux consistant en:

- un léchage superficiel ou à profondeur modérée des ferrailles par des fumées chaudes (voir brevets français 1 312 160, 1 331 339, 1 387 077; brevet allemand 1 508 292 et brevets américains 3 425 676 et 3 533 612); l'inconvénient majeur des dispositifs ou procédés décrits dans ces brevets réside dans une récupération très incomplète de l'énergie des gaz, à moins de prévoir des longueurs d'échanges thermiques démesurées;
- ceux consistant en une traversée intime d'une masse de ferrailles obstruant entièrement le circuit; les ferrailles sont alors toujours immobiles ou en grande partie immobiles au cours d'un cycle d'élaboration (voir brevets français 1 138 829, 1 548 324, 1 589 630, 1 401 905 et le brevet allemand 1 508 297); dans ces dispositifs la récupération est limitée par le fait que les fumées sortent de plus en plus chaudes au cours de l'échange;
- ceux utilisant un four tunnel rotatif (voir brevets français 1 138 029 et 1 434 287); ces récupérateurs récupèrent assez bien l'énergie par rayonnement dans les parties chaudes mais mal dans les parties froides et médiocrement par convection tout au long du tunnel, ce qui oblige à des longueurs demesurées si on veut épuiser l'énergie thermique des gaz;
- ceux utilisant des récupérateurs sur grilles au travers des couches de ferrailles d'épaisseur modeste (voir brevet britannique 933 353 et brevet américain 3 301 662); le courant croisé obligatoire dans ce cas et le fait que les fumées sortent très chaudes en traversant des ferrailles très chaudes interdisent d'épuiser l'énergie thermique des fumées.

Le demandeur a établi suivant la présente invention que pour récupérer de façon poussée l'énergie thermique des gaz, les conditions suivantes sont nécessaires:

- capter totalement les gaz, sans fuite, surtout de gaz chauds, à aucun endroit,
- éviter les entrées d'air froid parasites,
- brûler les gaz de façon stoechiométrique,
- faire traverser la totalité des ferrailles par la totalité des fumées, sans court-circuit possible;

– avoir une surface d'échange thermique suffisante (en conditionnant les ferrailles ou en augmentant leur quantité);

– équilibrer les flux thermiques au travers de la charge pour éviter les échanges préférentiels ou les zones à échange insuffisant;

– avoir un chargement en continu des ferrailles froides sur le circuit de sortie des gaz;

– une circulation des gaz le plus possible à contre-courants parallèles;

– une perte thermique par les parois, aussi faible que possible, ce qui implique entre autres une surface externe de l'installation aussi faible que possible.

L'EP-A-A 056 773 décrit un four électrique à arcs permettant de fondre en continu de la ferraille.

Sa partie interne comporte une zone de stockage située sur le côté de la sole, extérieurement et au-dessus de celle-ci, et agencée de manière à pouvoir y stocker un certain volume de ferrailles. Il est équipé d'un pousseur situé à la partie basse de ladite zone latérale de stockage et agencé de manière à pouvoir pousser vers la sole la base du tas de ferrailles emmagasiné dans ladite zone. La zone latérale est équipée d'une ouverture du genre trappe ou porte située à sa partie supérieure de manière à pouvoir être alimentée en ferrailles froides, et est raccordée à la conduite d'évacuation des fumées de façon à être traversée par celles-ci.

Le DE-A-32 19 984 décrit un réacteur pour la fabrication de fer dont l'ouverture supérieure débouche dans un conduit vertical d'alimentation en ferrailles. A la partie inférieure de ce conduit est agencé un poussoir qui permet comme dans le dispositif décrit dans l'EP-A-0 056 884 de pousser les ferrailles vers le réacteur.

Dans les deux dispositifs ci-dessus, les fumées traversent à contre-courant les ferrailles et préchauffent celles-ci.

Le but de la présente invention est de proposer un procédé qui permet de faire avancer la matière solide à préchauffer sans aucun organe mécanique en contact avec cette matière.

L'invention vise un procédé pour charger en continu un réacteur en matière solide et réchauffer cette dernière par échange thermique avec les gaz chauds émis par le réacteur, dans lequel on introduit la matière solide dans un compartiment présentant une ouverture de sortie communiquant avec l'ouverture de sortie des gaz chauds du réacteur, on fait déplacer cette matière solide vers l'ouverture de sortie, on aspire les gaz chauds émis par le réacteur de façon à faire circuler ces gaz chauds à travers la matière solide à contre-courant par rapport au sens de déplacement de la matière solide vers l'ouverture de sortie du compartiment.

Suivant l'invention, ce procédé est caractérisé en ce que pour déplacer la matière solide dans le compartiment, on pousse ce compartiment vers une butée de façon à exercer sur ce compartiment un chox au contact de cette butée, puis on ramène celu-ci à la position initiale.

Selon un autre aspect de l'invention, l'installation pour charger en continu un réacteur en matière solide et réchauffer cette dernière par échange thermique avec les gaz chauds émis par le réacteur, comprend un compartiment comportant une ouverture supérieure de chargement en matière solide et une ouverture inférieure de sortie de cette matière, communiquant avec l'ouverture de sortie des gaz chauds du réacteur, des moyens pour déplacer cette matière solide entre l'ouverture de chargement et l'ouverture de sortie du compartiment, le compartiment comprenant en outre une ouverture de sortie des gaz émis par le réacteur, située à l'opposé de l'ouverture d'entrée de ces gaz, des moyens étant prévus pour aspirer les gaz à la sortie de l'ouverture, de façon que ces gaz circulent à contre-courant par rapport au sens de déplacement de la matière solide.

Suivant l'invention, cette installation est caractérisée en ce que le compartiment est monté de façon mobile dans la direction du déplacement de la matière solide, vers une position dans laquelle les ouvertures de sortie du compartiment et du réacteur sont situées l'une au-dessus de l'autre, cette position étant définie par une butée fixe et une butée mobile fixée au compartiment, des moyens étant prévus pour pousser le compartiment vers la butée fixe de façon à obtenir un choc au contact des deux butées et pour ramener ce compartiment à la position initiale.

D'autres particularités et avantages de l'invention apparaîtront encore dans la description ci-après.

Aux dessins annexés, donnés à titre d'exemples non limitatifs:

– la figure 1 est une vue schématique en élévation et en coupe longitudinale partielle d'une installation conforme à l'invention,

– la figure 2 est une vue de dessus de l'installation représenté sur la figure 1,

– la figure 3 est une vue en coupe suivant le plan III–III de la figure 1,

– la figure 4 est une vue en coupe suivant le plan IV–IV de la figure 1,

– la figure 5 est une vue en coupe suivant le plan V–V de la figure 1,

– la figure 6 est une vue en coupe suivant le plan VI–VI de la figure 1,

– la figure 7 est une vue en coupe suivant le plan VII–VII de la figure 1,

– la figure 8 est une vue en coupe suivant le plan VIII–VIII de la figure 1,

– la figure 9 est une vue en coupe suivant le plan IX–IX de la figure 1.

Les figures annexées représentent une installation pour charger en continu un convertisseur 1 en ferrailles 2 et réchauffer ces dernières par échange thermique avec les gaz chauds G émis par le convertisseur 1.

Suivant l'invention, cette installation comprend un compartiment 3 comportant une ouverture supérieure 4 de chargement en ferrailles et une ouverture inférieure 5 de sortie de ces ferrailles, placée au-dessus de l'ouverture de sortie 6 des gaz chauds G du convertisseur 1, de façon que ces gaz chauds puissent pénétrer dans le compartiment 3.

Des moyens qui seront décrits plus en détail plus loin sont prévus pour déplacer les ferrailles 2 entre l'ouverture de chargement 4 et l'ouverture de sortie 5 du compartiment 3 et créer entre ces ferrailles et les gaz G émis par le convertisseur 1, une surface d'échange.

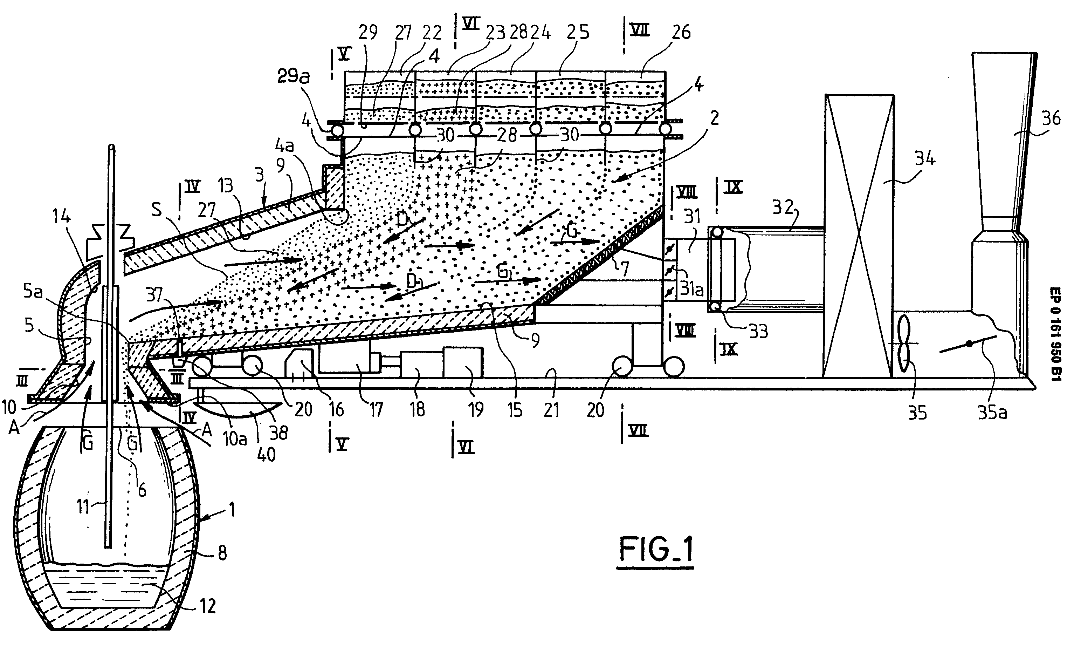

Le compartiment 3 comprend en outre une ouverture 7 de sortie des gaz G émis par le convertisseur 1 située à l'opposé de l'ouverture d'entrée 5 de ces gaz et sous l'ouverture 4 de chargement en ferrailles 2, de façon que ces gaz G circulent à contre-courants légèrment croisés (voir flèche sur la figure 1) par rapport au sens de déplacement D des ferrailles.

L'intérieur du convertisseur 1 est tapissé par un revêtement en matière réfractaire 8. Un revêtement en matière réfractaire 9 est également prévu à l'intérieur du compartiment 3.

On voit sur la figure 1 que l'ouverture supérieure 4 de chargement du compartiment 3 est décalée par rapport à l'ouverture inférieure 5 de sortie, dans le sens du déplacement D des ferrailles 2. Ce décalage entre les deux ouvertures 4 et 5 est tel que la matière solide 2 forme entre le bord inférieur aval 4a de l'ouverture 4 de chargement et le bord amont 5a de l'ouverture de sortie 5 un talus constituant la surface d'attaque S des matières par les fumées.

L'ouverture de sortie 5 du compartiment 3 présente une surface 10 évasée vers le bas, dont le bord libre 10a est situé à une certaine distance de l'ouverture 6 de sortie des gaz du convertisseur 1. L'espace ainsi créé permet de créer une circulation d'air (voir flèches A de la figure 1) qui entraîne les gaz chauds dans la direction des flèches G.

La section de l'ouverture 5 de sortie du compartiment 3 est inférieure à la section de l'ouverture 6 de sortie des gaz chauds G du convertisseur 1. Dans l'axe de ces ouvertures 5 et 6, est disposée une lance à oxygène 11 qui insuffle de l'oxygène dans le bain de métal 12 contenu dans le convertisseur 1, dans le cas particulier d'un soufflage à l'oxygène par le haut.

La paroi supérieure 13 du compartiment 3 présente dans la zone comprise entre l'ouverture supérieure 4 de chargement et l'ouverture inférieure de sortie 5, une surface 13 inclinée vers le bas qui est raccordée à l'ouverture de sortie 5 par une surface courbe 14.

L'ouverture de sortie 7 des gaz G du compartiment 3 est une grille s'étendant à partir du fond 15 du compartiment 3 et qui présente une inclinaison sensiblement identique à celle de la surface d'attque S formée par le talus des ferrailles 2.

Par ailleurs, le fond 15 du compartiment 3 peut être incliné vers l'ouverture inférieure de sortie 5. Cette inclinaison est variable en fonction des caractéristiques des ferrailles 2 utilisées.

Comme on le voit également sur la figure 1, le compartiment 3 est monté de façon mobile sur des galets 20 ou des patins disposés sur un chemin de roulement 21 ou de glissement horizontal ou incliné, suivant une certaine course dirigée dans la direction générale D de déplacement des ferrailles 2. La fin de cette course correspond à la position dans laquelle les ouvertures de sortie 5, 6 du compartiment 3 et du convertisseur 1 sont disposées l'une au-dessus de l'autre. Cette position est définie par une butée fixe 16 et une butée mobile 17 fixée au fond 15 du compartiment 3. Des moyens tels qu'un vérin 18 en appui contre une partie fixe 19 sont prévus pour pousser le compartiment 3 vers la butée fixe 16 de façon à exercer un choc sur ce compartiment au contact des deux butées 16, 17. Ce vérin 18 permet par ailleurs de ramener ce compartiment 3 à la position initiale.

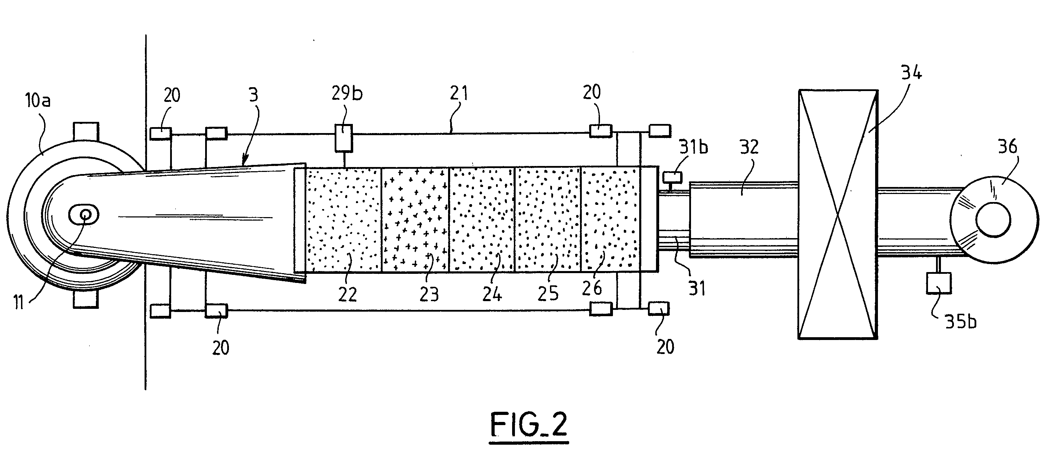

Comme on le voit d'autre part sur les figures 1 et 2, l'ouverture 4 de chargement du compartiment 3 est surmontée par des silos de chargement 22, 23, 24, 25, 26 à double étage renfermant des matières solides de différentes compositions. Chaque étage comprend une trappe 29 à manœuvre non simultanée avec celle de l'autre étage.

Dans l'exemple représenté, le premier silo 22 adjacent au bord aval 4a de l'ouverture de chargement 4, contient de la chaux 27, le suivant des ferrailles huileuse 28 et les autres, des ferrailles ordinaires.

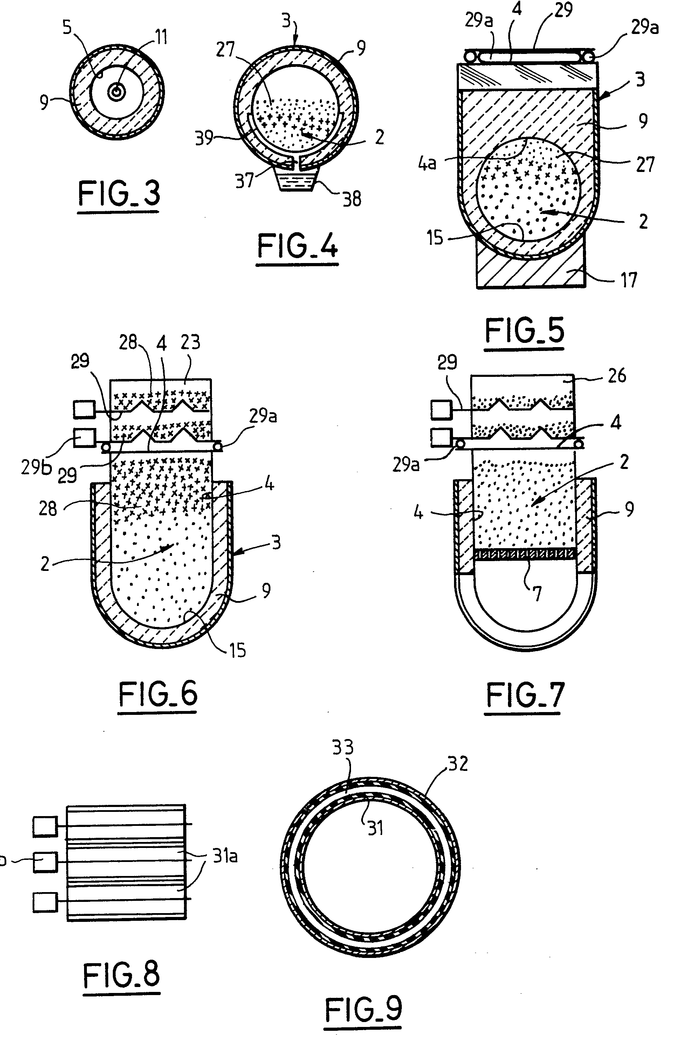

Les deux trappes 29 de chaque étage de ces silos 22 à 26 sont actionnées chacune par un vérin 29b (figures 6 et 7) permettant de déverser la matière solide dans le compartiment 3. Dans le prolongement des parois verticales qui séparent les silos 22 à 26 et sous les joints coulissants 29a sont disposées des chicanes 30 qui pénètrent dans la matière solide et s'opposent au passage des gaz G au-dessus des ferrailles 2.

Entre la partie inférieure des silos 22 à 26 et le bord supérieur de l'ouverture de chargement 4 sont disposés des joints 29a (voir figures 1 et 5) qui réalisent l'étanchéité entre les différents silos 22 à 26 et l'intérieur du compartiment 3, tout en permettant à ce dernier de se déplacer par rapport au silo.

La grille inclinée 7 par laquelle les gaz G sortent du compartiment 3 après avoir traversé les ferrailles 2 est reliée à un dispositif d'épuration de ces gaz. Ce dispositif comprend un tuyau 31 monté de façon coulissante et étanche dans un tuyau 32 au moyen d'un joint torique 33 (voir figures 1 et 9), le tuyau 32 débouchant dans un épurateur de fumée 34 qui comporte à sa sortie un extracteur de fumées 35 qui évacue ces fumées vers la cheminée 36.

Les débits des fumées G pénétrant dans le tuyau 31 sont réglables au moyen de volets rotatifs d'équilibrage superposés 31a commandés par des servo-moteurs 31b (voir figures 1 et 8). En aval de l'extracteur 35 est disposé un volet rotatif 35a de réglage de débit principal actionnné par un servo-moteur 35b (voir figure 2).

Sur les figures 1 et 4, on voit d'autre part que le fond 15 du compartiment 3 comporte légèrement en amont de l'ouverture de sortie 5, un orifice 37 sous lequel est placé un récipient 38 de collecte des matières non ferreuses fusibles à la température moyenne des ferrailles en cet endroit. Pour faciliter l'évacuation de ces matières fusibles par l'orifice 37, des rigoles 39 (voir figure 4) sont ménagées de part et d'autre de cet orifice 37, dans le revêtement réfractaire 9 du fond du compartiment 3. Ces rigoles 39 s'étendent jusqu'à une hauteur suffisante des parois latérales du compartiment 3.

Par ailleurs, près de la surface évasée de sortie 10 du compartiment 3 est prévue une coupelle 40 qui a pour rôle à l'arrêt en étant mise sous l'ouverture 10, de récolter les ferrailles susceptibles de tomber accidentellement. Le rôle de cette coupelle est d'autre part d'obturer la sortie 10 du compartiment 3 pendant les périodes de non-fonctionnement de l'installation.

On va maintenant exposer le fonctionnement de l'installation que l'on vient de décrire.

A l'instant initial, l'ouverture de sortie 5 du compartiment 3 est centrée sur celle du convertisseur 1, et la coupelle 40 est dégagée comme indiqué sur la figure 1. On abaisse la lance 11 et simultanément l'extracteur 35 commence à aspirer les gaz G du convertisseur 1 et l'air de combustion ambiant A. Le débit d'air aspiré est réglé pour que les fumées soient neutres à la sortie de l'installation.

L'installation est alors en état de fonctionner.

Si la température du bain 12 le permet ou l'exige, on ajoute des ferrailles chaudes 2 ou des riblons chauds thermiquement équivalents. Pour ce faire, on recule le compartiment 3 vers la droite comme indiqué sur la figure 1, de façon à ce que la sortie 5 soit encore située au-dessus de l'ouverture 6 du convertisseur 1. Ce mouvement est relativement lent et est assuré par le vérin 18 ou un vérin antagoniste analogue. Puis on accélère vivement le compartiment 3 vers la gauche à l'aide du vérin 18. Dès que la sortie 5 du compartiment 3 est centrée au-dessus de celle du convertisseur 1, on stoppe brusquement le mouvement du compartiment 3 à l'aide de la butée fixe 16. Sous l'effet de ce choc, les ferrailles 2 ou les riblons thermiquement équivalents continuent à avancer par inertie et tombent par gravité à l'intérieur du convertisseur 1. La quantité de ferrailles 2 ajoutée est réglée soit par la fréquence des chocs, soit par l'intensité de ceux-ci, soit par les deux à la fois.

Le même mouvement d'avance des ferrailles 2 peut être obtenu pour les petites installations en couplant le compartiment mobile 3 à un système élastique et à un système possédant une force de composante horizontale cyclique d'une fréquence telle que le compartiment mobile 3 prenne un mouvement oscillatoire en résonance. Dans ce cas, le mouvement d'avance des ferrailles 2 par inertie est dû à la décélération du compartiment 3 et au fait que les ferrailles 2 ne peuvent avancer que suivant la pente descendante du fond 15 du compartiment mobile 3.

Dans l'exemple représenté, le chargement du compartiment 3 avec des ferrailles froides 2 est réalisé à partir de silos fixes 22 à 26, pour réduire la masse en mouvement. Cependant, des silos réduits aux chicanes 30 faisant corps avec le compartiment 3 pourraient également convenir.

L'installation conforme à la présente invention est utilisable lors de la fabrication de l'acier à partir de la fonte, dans des convertisseurs soufflés à l'oxygène par le haut ou par le bas. Cette installation est également utilisable dans des installations de fabrication de l'acier en continu, dans des fours électriques, ainsi que dans tout réacteur laissant échapper du gaz contenant une certaine énergie thermique pouvant réchauffer les matières solides, dont le retour sous forme chaude dans le réacteur qui a donné naissance au gaz présente quelque intérêt.

**Revendications**

1. Procédé pour charger en continu un réacteur (1) en matière solide (2) et réchauffer cette dernière par échange thermique avec les gaz chauds (G) émis par le réacteur (1), dans lequel on introduit la matière solide (2) dans un compartiment (3) présentant une ouverture de sortie (5) communiquant avec l'ouverture de sortie (6) des gaz chauds (G) de réacteur (1), on fait déplacer cette matière solide (2) vers l'ouverture de sortie (5), on aspire les gaz chauds (G) émis par le réacteur (1) de façon à faire circuler ces gaz chauds (G) à travers la matière solide (2) à contre-courant par rapport au sens de déplacement (D) de la matière solide vers l'ouverture de sortie (5) du compartiment (3), caractérisé en ce que pour déplacer la matière solide (2) dans le compartiment (3), on pousse ce compartiment vers une butée (16) de façon à exercer sur ce compartiment un choc au contact de cette butée, puis on ramène celui-ci à la position initiale.

2. Installation pour charger en continu un réacteur (1), en matière solide (2) et réchauffer cette dernière par échange thermique avec les gaz chauds (G) émis par le réacteur (1), comprenant un compartiment (3) comportant une ouverture supérieure (4) de chargement en matière solide (2) et une ouverture inférieure (5) de sortie de cette matière, communiquant avec l'ouverture de sortie (6) des gaz chauds (G) du réacteur (1), des moyens pour déplacer cette matière solide entre l'ouverture de chargement (4) et l'ouverture de sortie (5) du compartiment, le compartiment (3) comprenant en outre une ouverture (7) de sortie des gaz émis par le réacteur, située à l'opposé de l'ouverture d'entrée (5) de ces gaz, des moyens (35) étant prévus pour aspirer les gaz (G) à la sortie de l'ouverture (7), de façon que ces gaz (G) circulent à contre-courant par rapport au sens de déplacement (D) de la matière solide (2), caractérisée en ce que le compartiment (3) est monté de façon mobile dans la direction du déplacement (D) de la matière solide (2), vers une position dans laquelle les ouvertures de sortie (5, 6) du compartiment (3) et du réacteur (1) sont situées l'une au-dessus de l'autre, cette position étant définie par une butée fixe (16) et une butée mobile (17) fixée au compartiment (3), des moyens (18) étant prévus pour pousser le compartiment (3) vers la butée fixe (16) de façon à obtenir un choix au contact des deux butées (16 et 17) et pour ramener ce compartiment (3) à la position initiale.

3. Installation conforme à la revendication 2, caractérisée en ce que l'ouverture supérieure (4) de chargement du compartiment (3) est décalée horizontalement par rapport à l'ouverture inférieure (5) de sortie.

4. Installation conforme à l'une des revendications 2 ou 3, caractérisée en ce que l'ouverture de sortie (5) du compartiment (3) présente une surface (10) évasée vers le bas, dont le bord libre (10a) est situé au-dessus de l'ouverture de sortie (6) des gaz du réacteur (1).

5. Installation conforme à la revendication 4, caractérisée en ce que la section de l'ouverture de sortie (5) du compartiment (3) est inférieure à la section de l'ouverture de sortie (6) des gaz chauds du réacteur (1).

6. Installation conforme à l'une des revendications 2 à 5, caractérisée en ce que l'ouverture de sortie (7) des gaz (G) du compartiment (3) est une grille s'étendant à partir du fond (15) du compartiment et présentant une inclinaison sensiblement identique à celle de ladite surface d'attaque (S) formée par la matière solide (2).

7. Installation conforme à l'une des revendications 2 à 6, caractérisée en ce que l'ouverture (4) de chargement du compartiment (3) est surmontée par des silos de chargement (22 à 26) à double étage, chaque étage étant fermé par une trappe, ces silos présentant à leur partie inférieure des séparations (30) qui pénètrent dans la matière solide.

8. Installation conforme à la revendication 7, caractérisée en ce que le réacteur (1) est un convertisseur pour la fabrication de l'acier à partir de la fonte et en ce que le premier silo (22) adjacent au bord aval (4a) de l'ouverture de chargement (4) contient de la chaux (27) ou analogue, le suivant (23) renfermant des ferrailles huileuses (28) et les autres des ferrailles ordinaires, ou des riblons thermiquement équivalents.

9. Installation coforme à l'une des revendications 2 à 8, caractérisée en ce que l'ouverture de sortie (7) des gaz (G) débouche dans un dispositif d'épuration (34) de ces gaz.

10. Installation conforme à l'une des revendications 2 à 9, caractérisée en ce que le fond (15) du compartiment comporte en amont de l'ouverture inférieure de sortie (5) un orifice (37) communiquant avec un récipient (38) de collecte des matières fusibles à la température des ferrailles en cet endroit.

11. Installation conforme à la revendication 9, caractérisée en ce que l'ouverture de sortie (7) des gaz (G) est reliée au dispositif d'épuration (34) au moyen de deux tuyaux (31, 32) montés de façon coulissante et étanche, l'un par rapport à l'autre.

## Claims

1. A process for continuously charging a reactor (1) with solid substance (2) and heating the same by heat exchange with the hot gases (G) evolved by the ractor (1), in which process the solid substance (2) is introduced into a compartment (3) formed with an outlet aperture (5) communicating with the outlet aperture (6) for the hot gases (G) of the reactor (1), the solid substance (2) is moved towards the outlet aperture (5) and hot gases (G) evolved by the reactor (1) are aspirated to move them through the solid substance (2) in coutercurrent to the direction (D) of movement thereof towards the outlet aperture (5) of the compartment (3), characterised in that to move the solid substance (2) in the compartment (3) the latter is pushed towards an abutment (16) so that the compartment experiences a vibration upon contact therewith, whereafter the compartment is returned to its initial position.

2. An installation for continuously charging a reactor (1) with solid substance (2) and heating the same by heat exchange with the hot gases (G) evolved by the reactor (1), the installation comprising a compartment (3) formed with a top aperture (4) through which the solid substance (2) is charged and with a bottom aperture (5) through which the substance (2) issues and which communicates with the reactor hot gas outlet aperture (6), means being provided to move the solid substance between the charging aperture (4) and the outlet aperture (5) of the compartment (3), the latter also being formed with an outlet aperture (7) for the gases evolved by the reactor, the aperture (7) being disposed remote from the gas inlet aperture (5), means (35) being provided to aspirate the gases (G) at their exit from the aperture (7) so that the gases (G) move in coutercurrent to the direction (D) of movement of the solid substance (2), characterised in that the compartment (3) is arranged for movement in the direction (D) of movement of the solid substance (2) towards a position in which the outlet apertures (5, 6) of the compartment (3) and reactor (1) are disposed on above another, this position being defined by a stationary abutment (16) and a moving abutment (17) secured to the compartment (3), means (18) being provided to push the compartment (3) towards the stationary abutment (16) so as to produce a vibration when the two abutments (16, 17) contact one another and to return the compartment (3) to its initial position.

3. An installation according to claim 2, characterised in that the top aperture (4) of the compartment (3) is offset horizontally from the bottom aperture (5) thereof.

4. An installation according to claim 2 or 3, characterised in that the bottom aperture (5) of the compartment has a downwardly flared surface (10) whose free edge (10a) is disposed above the reactor gas outlet aperture (G).

5. An installation according to claim 4, characterised in that the cross-section of the outlet aperture (5) of the compartment (3) is smaller than the cross-section of the reactor hot gas outlet aperture (6).

6. An installation according to any of claims 2–5, characterised in that the aperture (7) through which the gases (G) issue from the compartment (3) is a grid extending from the base (15) of the compartment and having substantially the same inclination as the leading surface (S) formed by the solid substance (2).

7. An installation according to any of claims 2–6, characterised in that the charging aperture (4) of the compartment (3) has above it two-storey charging bunkers (22–26), each storey being closed by a trap, the bunkers having bottom separations (30) which extend into the solid substance.

8. An installation according to claim 7, characterised in that the reactor (1) is a converter for producing steel from cast iron and the first bunker (22) adjacent the downstream edge (4a) of the charging aperture (4) contains lime (27) or the like, the next bunker (23) containing oily ferrous scrap (28) and the others containing ordinary ferrous scrap or thermally equivalent selected scrap.

9. An installation according to any of claims 2–8, characterised in that the gas outlet aperture (7) extends into a gas-cleaning facility (34).

10. An installation according to any of claims 2–9, characterised in that upstream of the bottom outlet aperture (5) the compartment base (15) is formed with an orifice (37) communicating with a receptacle (38) for collecting the fusible substances at the temperature of the ferrous scrap in this zone.

11. An installation according to claim 9, characterised in that the gas outlet aperture (7) is connected to the gas-cleaning facility (34) by way of two pipes (31, 32) arranged slidingly and sealingly relatively to one another.

**Patentansprüche**

1. Verfahren zum kontinuierlichen Beschicken eines Reaktionsgefässes (1) mit Feststoffen (2) und zum Erwärmen letzterer durch Wärmeaustausch mit den vom Reaktionsgefäss (1) abgegebenen heissen Gasen (G), bei welchem man die Feststoffe (2) in ein Abteil (3) einbringt, das eine mit der Austrittsöffnung (6) des Reaktionsgefässes (1) für die Heissgase (G) in Verbindung stehende Austrittsöffnung (5) aufweist, diese Feststoffe (2) zur Austrittsöffnung (5) fortbewegt und die vom Reaktionsgefäss (1) abgegebenen Heissgase (G) so ansaugt, dass sie durch die Feststoffe (2) im Gegenstrom in bezug auf die Richtung (D) der Fortbewegung der Feststoffe zur Austrittsöffnung (5) des Abteils (3) zirkulieren, dadurch gekennzeichnet, dass man zur Fortbewegung der Feststoffe (2) im Abteil (3) dieses Abteil so gegen einen Anschlag (16) schiebt, dass beim Kontakt mit diesem Anschlag auf dieses Abteil eine Schlagwirkung ausgeübt wird, worauf man letzteres in seine Ausgangsstellung zurückführt.

2. Vorrichtung zum kontinuierlichen Beschicken eines Reaktionsgefässes (1) mit Feststoffen (2) und Erwärmen letzterer durch Wärmeaustausch mit den vom Reaktionsgefäss (1) abgegebenen heissen Gasen (G), mit einem Abteil (3), das eine obere Öffnung (4) zur Beschickung mit Feststoffen (2) und eine mit der Austrittsöffnung (6) des Reaktionsgefässes (1) für die Heissgase (G) in Verbindung stehende untere Austrittsöffnung (5) für diese Feststoffe besitzt, und mit Mitteln zum Fortbewegen dieser Feststoffe von der Beschickungsöffnung (4) zur Austrittsöffnung (5) des Abteils, wobei das Abteil (3) weiters eine Austrittsöffnung (7) für die von dem Reaktionsgefäss abgegebenen Gase besitzt, die gegenüber der Eintrittsöffnung (5) für diese Gase angeordnet ist, und wobei Mittel (35) zum Ansaugen der Gase (G) am Austritt der Öffnung (7) vorgesehen sind, derart, dass diese Gase (G) im Gegenstrom in bezug auf die Fortbewegungsrichtung (D) der Feststoffe (2) zirkulieren, dadurch gekennzeichnet, dass das Abteil (3) in der Fortbewegungsrichtung (D) der Feststoffe (2) in eine Stellung bewegbar montiert ist, in der die Austrittsöffnungen (5, 6) des Abteils (3) und des Reaktionsgefässes (1) übereinanderliegen, wobei diese Stellung von einem festen Anschlag (16) und einem am Abteil (3) befestigten beweglichen Anschlag (17) bestimmt wird, und wobei Mittel (18) zum Schieben des Abteils (3) gegen den festen Anschlag (16) zwecks Erzielung einer Schlagwirkung beim Kontakt der beiden Anschläge (16 und 17) sowie zum Rückführen dieses Abteils (3) in die Ausgangsstellung vorgesehen sind.

3. Vorrichtung nach Anspruch 2, dadurch gekennzeichnet, dass die obere Beschickungsöffnung (4) des Abteils (3) in bezug auf die untere Austrittsöffnung (5) horizontal versetzt ist.

4. Vorrichtung nach Anspruch 2 oder 3, dadurch gekennzeichnet, dass die Austrittsöffnung (5) des Abteils (3) eine sich nach unten konisch erweiternde Fläche (10) aufweist, deren freier Rand (10a) oberhalb der Gasaustrittsöffnung (6) des Reaktionsgefässes (1) liegt.

5. Vorrichtung nach Anspruch 4, dadurch gekennzeichnet, dass der Querschnitt der Austrittsöffnung (5) des Abteils (3) kleiner ist als der Querschnitt der Austrittsöffnung (6) des Reaktionsgefässes (1) für die Heissgase.

6. Vorrichtung nach einem der Ansprüche 1 bis 5, dadurch gekennzeichnet, dass die Austrittsöffnung (7) des Abteils (1) für die Gase (G) ein Gitter ist, das sich vom Boden (15) des Abteils (3) wegerstreckt und eine Neigung besitzt, die im wesentlichen gleich ist jener der von den Feststoffen (2) gebildeten Angriffsfläche (S).

7. Vorrichtung nach einem der Ansprüche 2 bis 6, dadurch gekennzeichnet, dass über der Beschickungsöffnung (4) des Abteils (3) zweietagige Beschickungsbunker (22 bis 26) montiert sind, wobei jede Etage durch einen Verschluss verschlossen ist und diese Bunker an ihrem unteren Ende Trennwände (30) aufweisen, die in die Feststoffe hineinragen.

8. Vorrichtung nach Anspruch 7, dadurch gekennzeichnet, dass das Reaktionsgefäss (1) ein Konverter für die Erzeugung von Stahl aus Schmelze ist und dass der dem stromabgelegenen Rand (4a) der Beschickungsöffnung (4) benachbarte erste Bunker (22) Kalk (27) oder dergleichen enthält, während der folgende (23) öligen Schrott (28) beinhaltet und die anderen gewöhnlichen oder thermisch äquivalenten Schrott enthalten.

9. Vorrichtung nach einem der Ansprüche 1 bis 8, dadurch gekennzeichnet, dass die Austrittsöffnung (7) für die Gase (G) in eine Einrichtung (34) zum Reinigen dieser Gase mündet.

10. Vorrichtung nach einem der Ansprüche 2 bis 9, dadurch gekennzeichnet, dass der Boden (15) des Abteils stromauf der unteren Austrittsöffnung (5) eine mit einem Behälter (38) zum Auffangen der bei der an dieser Stelle herrschenden Schrottemperatur schmelzbaren Stoffe in Verbindung stehende Öffnung (37) aufweist.

11. Vorrichtung nach Anspruch 9, dadurch gekennzeichnet, dass die Austrittsöffnung (7) für die Gase (G) mit der Reinigungseinrichtung (34) über zwei gegeneinander verschiebbar und abgedichtet montierte Rohre (31, 32) verbunden ist.

FIG_1

EP 0 161 950 B1

FIG. 2

EP 0 161 950 B1

FIG_3

FIG_4

FIG_5

FIG_6

FIG_7

FIG_8

FIG_9

13